(19)

**Europäisches Patentamt**
**European Patent Office**
**Office européen des brevets**

(11) **EP 1 833 112 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(21) Anmeldenummer: **07103566.1**

(22) Anmeldetag: **06.03.2007**

(51) Int Cl.:
***H01M 8/04*** *(2006.01)*

(54) **Elektroden-Membran-Einheit und Brennstoffzelle**

Electrode membrane unit and fuel cell

Unité de membrane d'électrodes et cellule combustible

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.03.2006 DE 102006012908**

(43) Veröffentlichungstag der Anmeldung:
**12.09.2007 Patentblatt 2007/37**

(73) Patentinhaber: **Deutsches Zentrum für Luft- und Raumfahrt e.V.**
**51147 Köln (DE)**

(72) Erfinder: **Kaz, Till**
**70186 Stuttgart (DE)**

(74) Vertreter: **Hoeger, Stellrecht & Partner**
**Patentanwälte**
**Uhlandstrasse 14c**
**70182 Stuttgart (DE)**

(56) Entgegenhaltungen:
**EP-A- 1 598 891          DE-A1- 19 917 812**
**US-A1- 2005 196 661     US-B1- 6 613 464**

- **DATABASE INSPEC [Online] THE INSTITUTION OF ELECTRICAL ENGINEERS, STEVENAGE, GB; Januar 2003 (2003-01), UCHIDA H ET AL: "Self-humidifying electrolyte membranes for fuel cells" XP002474718 Database accession no. 7558053 & Journal of the Electrochemical Society Electrochem. Soc USA, Bd. 150, Nr. 1, 15. November 2002 (2002-11-15), Seiten A57-A62, ISSN: 0013-4651**

EP 1 833 112 B1

**Beschreibung**

Die Erfindung betrifft eine Elektroden-Membran-Einheit für eine Brennstoffzelle, welche mit gasförmigem Brennstoff betrieben ist, umfassend eine Kathode, eine Anode und eine protonenleitende Membraneinrichtung, welche zwischen der Anode und der Kathode angeordnet ist, wobei die Membraneinrichtung mindestens eine katalytische Zwischenlage aufweist, an welcher Wasser durch eine katalytische Reaktion von Oxidator und Brennstoff erzeugbar ist.

Die Erfindung betrifft ferner eine Brennstoffzelle.

Brennstoffzellen vom Typ PEFC (Protone Exchange Fuel Cells) weisen eine Membran auf, welche üblicherweise aus einer protonenleitenden Folie hergestellt ist. Die Membran leitet nur in befeuchtetem Zustand Protonen.

Aus der DE 199 17 812 C2 ist eine Membranelektroneneinheit für eine Brennstoffzelle bekannt, welche eine Polymermembran mit einer Anode auf der einen Seite und einer Kathode auf der anderen Seite umfasst, wobei Anode und Kathode Katalysatorschichten zwecks Durchführung des Brennstoffzellenprozesses mit Rekombination der Reaktionsgase aufweisen. Eine innerhalb der Membran lokalisierte Katalysatorschicht, an der die Rekombination stattfindet, dient zur Gewinnung von Wasser aus der Rekombination der Reaktionsgase zwecks Befeuchtung der Membran.

In dem Artikel "Self-Humidifying Electrolyte Membranes for Fuel Cells" von H. Uchida et al. in Journal of The Electrochemical Society, 150 (1) A57-A62 (2003) sind Polymerelektrolytmembrane (PEM) beschrieben, die selbstbefeuchtend sind.

Aus der US 2005/0196661 A1 ist eine Membran-Elektroden-Einheit bekannt, welche eine Anode, eine Kathode und eine Membran zwischen der Anode und der Kathode aufweist. Eine katalytische Schicht ist zwischen der Kathode und der Membran vorgesehen. Diese katalytische Schicht dient dazu, Sauerstoff zu reduzieren und Wasserstoffperoxid und freie Radikale zu zerlegen, um Wasser zu produzieren.

Der Erfindung liegt die Aufgabe zugrunde, eine Elektroden-Membran-Einheit der eingangs genannten Art bereitzustellen, welche einfach herstellbar und sicher betreibbar ist.

Diese Aufgabe wird bei der eingangs genannten Elektroden-Membran-Einheit erfindungsgemäß dadurch gelöst, dass die mindestens eine katalytische Zwischenlage mit der Anode über eine Widerstandseinrichtung elektrisch verbunden ist.

Durch die katalytische Zwischenlage lässt sich die Membraneinrichtung auf einfache Weise herstellen. Beispielsweise wird eine erste Membranlage hergestellt, auf welcher die katalytische Zwischenlage aufgebracht wird. Es wird dann eine weitere Membranlage auf der katalytischen Zwischenlage angeordnet.

Bei der erfindungsgemäßen Lösung ist in die Membraneinrichtung eine Befeuchtungseinrichtung integriert. An der katalytischen Zwischenlage können Brennstoff und Oxidator katalytisch zu Wasser reagieren, so dass die Membraneinrichtung von innen heraus befeuchtet wird. Dadurch ist eine externe Befeuchtung von Reaktionsgasen nicht mehr notwendig. Ein externes Befeuchtungsmodul verbraucht zusätzlich Energie, Bauraum und Kosten.

Durch die erfindungsgemäße Lösung ist es möglich, auch bei Temperaturen oberhalb von 100°C eine ausreichende Befeuchtung der Membraneinrichtung sicherzustellen, ohne dass beispielsweise der Betriebsdruck der Reaktionsgase erhöht werden muss.

Wenn die mindestens eine katalytische Zwischenlage mit der Kathode oder der Anode elektrisch verbunden ist, lassen sich Protonen zur Rekombination nutzen. Es ergeben sich zusätzliche Steuerungsmöglichkeiten bzw. Einstellmöglichkeiten. Beispielsweise lässt sich durch eine elektrische Verbindung zwischen der katalytischen Zwischenlage und der Kathode die Protonenleitung verbessern. Bei der Kontaktierung der katalytischen Zwischenlage mit der Anode lässt sich die Wasserproduktion erhöhen, da zusätzlich Protonen zur Wasserbildung genutzt werden.

Durch die katalytische Zwischenlage wird auch verhindert, dass Oxidator von der Kathodenseite zur Anodenseite gelangen kann und Brennstoff von der Anodenseite zur Kathodenseite gelangen kann. An der katalytischen Zwischenlage erfolgt eine Abreaktion. Der Übergang von Fremdreaktionsgas zur anderen Elektrode führt zu einer Mischpotentialbildung und damit zu einer Absenkung des Ruhepotentials, was wiederum den Wirkungsgrad der Brennstoffzelle verringert. Durch die erfindungsgemäße Lösung wird dies verhindert oder zumindest stark verringert.

Die mindestens eine katalytische Zwischenlage ist mit der Anode über eine Widerstandseinrichtung verbunden. Dadurch ergeben sich zusätzliche Steuerungsmöglichkeiten, da der Stromfluss zwischen der Anode und der katalytischen Zwischenlage einstellbar ist und damit die Protonenleitung einstellbar ist.

Insbesondere ist die Membraneinrichtung mehrlagig aufgebaut mit einer ersten Membranlage, welche an die Kathode grenzt, einer zweiten Membranlage, welche an die Anode grenzt, und der mindestens einen katalytischen Zwischenlage. Eine solche Membraneinrichtung lässt sich auf einfache Weise herstellen.

Insbesondere ist eine einzige katalytische Zwischenlage zwischen der ersten Membranlage und der zweiten Membranlage angeordnet und grenzt dabei jeweils an diese. Eine solche Membraneinrichtung lässt sich auf einfache Weise herstellen.

Es kann vorgesehen sein, dass die erste Membranlage eine kleinere Dicke aufweist als die zweite Membranlage. Dadurch lässt sich sicherstellen, dass Sauerstoff zu der katalytischen Zwischenlage gelangt.

Insbesondere erstreckt sich die mindestens eine katalytische Zwischenlage über die ganze Querschnittsfläche der Membraneinrichtung quer zur Verbindungsrichtung zwischen der Kathode und der Anode. Dadurch müssen Protonen die katalytische Zwischenlage durchlaufen. Weiterhin lässt sich so garantieren, dass Brennstoff und Oxidator, welcher zu der katalytischen Zwischenlage gelangt, sich zu Wasser abreagiert.

Günstig ist es, wenn die mindestens eine katalytische Zwischenlage durch Aufsprühen hergestellt ist. Dadurch lässt sich eine dünne Schicht auf einfache Weise herstellen.

Günstig ist es, wenn die Membraneinrichtung durchlässig für Oxidator zur mindestens einen katalytischen Zwischenlage ausgebildet ist. Dadurch lässt sich der Oxidatortransport zu der katalytischen Zwischenlage (abgesehen von der sowieso vorhandenen Oxidatordiffusion) gewährleisten.

Insbesondere kann die Membraneinrichtung mit einer Mehrzahl von Öffnungen versehen sein, um den Oxidatortransport zu der katalytischen Zwischenlage zu gewährleisten. Beispielsweise ist die Membraneinrichtung perforiert ausgebildet.

Günstig ist es dabei, wenn eine erste Membranlage, welche zwischen der Kathode und der mindestens einen katalytischen Zwischenlage angeordnet ist, durchlässig für Oxidator ausgebildet ist.

Es ist dann günstig, wenn die Widerstandseinrichtung bezüglich ihres Widerstandswerts einstellbar ausgebildet ist, um den Stromfluss entsprechend einzustellen.

Beispielsweise ist es vorgesehen, dass die Widerstandseinrichtung bezüglich ihres Widerstandswerts temperatursensitiv ausgebildet ist. Dadurch kann der Stromfluss je nach Temperatur variieren. Dadurch wiederum lässt sich eine automatische Regelung der Befeuchtung erreichen. Insbesondere ist es vorgesehen, dass der Widerstand mit Temperaturerhöhung abnimmt, um so bei Temperaturerhöhung die Protonenleitung zu verbessern. Dadurch wiederum erhält man eine erhöhte Wasserbildung in der Membraneinrichtung.

Günstig ist es, wenn die Dicke der mindestens einen katalytischen Zwischenlage in der Größenordnung Mikrometer liegt. Eine typische Dicke liegt bei ca. 3 µm. Dadurch werden die elektrolytischen Eigenschaften der Membraneinrichtung nicht negativ beeinflusst, wobei sich auf effektive Weise eine interne Befeuchtungseinrichtung ausbilden lässt.

Insbesondere ist die katalytische Zwischenlage protonenleitend. Dadurch würden die normalen Brennstoffzellenreaktionen durch die Wasserbildung an der katalytischen Zwischenlage nicht wesentlich beeinflusst.

Insbesondere ist der Brennstoff (gasförmiger) Wasserstoff.

Vorteilhafterweise ist die mindestens eine katalytische Zwischenlage aus einem Katalysatormaterial wie Platin oder Platin-Ruthenium hergestellt. Dadurch lässt sich auf effektive Weise eine katalytische Umsetzung von Oxidator und Brennstoff zur Wasserbildung erreichen.

Die erfindungsgemäße Elektroden-Membran-Einheit lässt sich auf vorteilhafte Weise in einer Brennstoffzelle verwenden.

Die Brennstoffzelle ist insbesondere eine PEFC-Brennstoffzelle.

Die nachfolgende Beschreibung bevorzugter Ausführungsformen dient im Zusammenhang mit der Zeichnung der näheren Erläuterung der Erfindung.

Die einzige

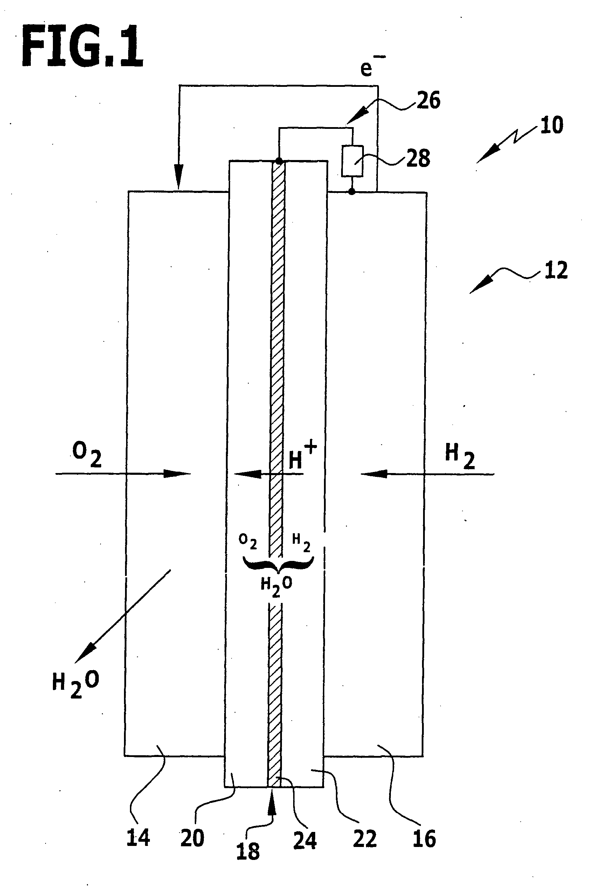

Figur 1    zeigt schematisch ein Ausführungsbeispiel einer erfindungsgemäßen Brennstoffzelle/Elektroden-Membran-Einheit.

Ein Ausführungsbeispiel einer erfindungsgemäßen Brennstoffzelle 10 umfasst eine Elektroden-Membran-Einheit 12. Die Elektroden-Membran-Einheit 12 weist eine Kathode 14, eine Anode 16 und eine protonenleitende Membraneinrichtung 18, welche zwischen der Anode 14 und der Kathode 16 angeordnet ist, auf.

Bei der Brennstoffzelle 10 handelt es sich insbesondere um eine solche vom Typ PEFC (Protone Exchange Membrane Fuel Cell). Der Kathode 14 wird Oxidator in der Form von reinem Sauerstoff oder Luftsauerstoff zugeführt. Der Anode 16 wird gasförmiger Brennstoff und insbesondere Wasserstoff zugeführt. Die Membraneinrichtung dient als Elektrolyt, als Träger für die Kathode 14 und die Anode 16 und als Separator für die gasförmigen Reaktanden. An der Anode läuft die Teilreaktion

$$H_2 \rightarrow 2H^+ + 2e^-$$

ab. An der Kathode läuft die Teilreaktion

$$2H^+ + \frac{1}{2}O_2 + 2e^- \rightarrow H_2O$$

ab.

Die Membraneinrichtung 18 umfasst eine erste Membranlage 20, welche an die Kathode 14 grenzt. Insbesondere ist die Kathode 14 an der ersten Membranlage 20 angeordnet. Ferner umfasst die Membraneinrichtung 18 eine zweite Membranlage 22, welche an die Anode 16 grenzt. Insbesondere ist die Anode 16 an der zweiten Membranlage 22 angeordnet.

Die erste Membranlage 20 und die zweite Membranlage 22 sind protonenleitend ausgebildet; sie sind beispielsweise auf der Basis eines perfluorierten, sulfonierten Polymers hergestellt. Ein mögliches Material für die erste Membranlage 20 und die zweite Membranlage 22 ist beispielsweise Nafion.

Zwischen der ersten Membranlage 20 und der zweiten Membranlage 22 ist eine katalytische Zwischenlage 24 angeordnet. Diese ist aus einem Katalysatormaterial wie Platin oder Platin-Ruthenium hergestellt. Das Katalysatormaterial kann auch kohlenstoffgeträgert sein. Die katalytische Zwischenlage 24 ist insbesondere durch Aufsprühen auf die erste Membranlage 20 oder die zweite Membranlage 22 hergestellt. Die katalytische Zwischenlage weist vorzugsweise eine im wesentlichen gleichmäßige Dicke (bezogen auf die Verbindungsrichtung zwischen der Kathode 14 und der Anode 16) auf. Dadurch sind die erste Membranlage 20 und die zweite Membranlage 22 im wesentlichen parallel zueinander ausgerichtet.

Eine typische Dicke der katalytischen Zwischenlage 24 liegt bei ca. 1 $\mu$m bis 5 $\mu$m.

Die katalytische Zwischenlage 24 erstreckt sich vorzugsweise über die gesamte Querschnittsfläche der ersten Membranlage 20 und der zweiten Membranlage 22, wobei die Querschnittsfläche quer zu der Verbindungsrichtung zwischen der Kathode 14 und der Anode 16 liegt. Dies bedeutet, dass in die Membraneinrichtung eindringendes Reaktionsgas die katalytische Zwischenlage 24 nicht umgehen kann.

Üblicherweise sind Membrane einer Brennstoffzelle 10 vom Typ PEFC nur dann protonenleitend, wenn sie befeuchtet sind. Oftmals reicht das bei der katalytischen Reaktion entstehende Wasser zur Befeuchtung einer Membran nicht aus, insbesondere bei Temperaturen oberhalb von 100°C. Aus dem Stand der Technik ist es bekannt, dass Reaktionsgase (Oxidator und/oder gasförmiger Brennstoff) zusätzlich befeuchtet werden.

Bei der erfindungsgemäßen Lösung bildet die katalytische Zwischenlage 24 eine integrierte Befeuchtungseinrichtung der Elektroden-Membran-Einheit 12. An ihr lassen sich katalytisch Wasserstoff und Sauerstoff zu Wasser umsetzen, wodurch die erste Membranlage 20 und die zweite Membranlage 22 von innen heraus befeuchtet werden.

Die katalytische Zwischenlage 24 ist protonenleitend und über die erste Membranlage 20 und die zweite Membranlage 22 von den Elektroden elektrisch getrennt. Dadurch wird die eigentliche Brennstoffzellenreaktion, zu der oben die Reaktionsgleichungen angegeben wurden, nicht behindert. Durch die katalytische Zwischenlage 24 wird weiterhin dafür gesorgt, dass Reaktionsgase, welche durch die erste Membranlage 20 diffundieren (Oxidator) bzw. durch die zweite Membranlage 22 diffundieren (Brennstoff) abreagieren können und damit nicht zur anderen Elektrode (Brennstoff zur Kathode 14, Oxidator zur Anode 16) gelangen können. Dadurch wird eine Mischpotentialbildung und eine damit einhergehende Absenkung des Ruhepotentials verhindert. Durch eine Mischpotentialbildung wird grundsätzlich der Wirkungsgrad einer Brennstoffzelle verschlechtert.

Die katalytische Zwischenlage 24 lässt sich auf einfache Weise herstellen, indem die erste Membranlage 20 und die zweite Membranlage 22 getrennt hergestellt werden und die katalytische Zwischenlage 24 dann auf einer der Membranlagen 20 oder 22 beispielsweise durch Aufsprühen hergestellt wird und anschließend die andere Membranlage 22 oder 20 auf der katalytischen Zwischenlage 24 positioniert wird.

Es kann vorgesehen sein, dass die erste Membranlage 20 durchlässig für den Oxidator ausgebildet ist (zusätzlich zu der vorhandenen Diffusionsdurchlässigkeit), um den Oxidatortransport zu der katalytischen Zwischenlage 24 zu ermöglichen. Eine solche erhöhte Durchlässigkeit kann beispielsweise über entsprechende Perforation der ersten Membranlage 20 erfolgen.

Es kann ferner vorgesehen sein, dass die Dicke der ersten Membranlage 20 (bezogen auf die Abstandsrichtung zwischen der Kathode 14 und der Anode 16) kleiner ist als die Dicke der zweiten Membranlage 22. Dadurch wird der Oxidatorzugang zu der katalytischen Zwischenlage 24 verbessert.

Die katalytische Zwischenlage 24 ist mit der Kathode 14 oder der Anode 16 elektrisch verbunden. Es kann sich dabei beispielsweise um eine Kurzschlussverbindung handeln. Es lassen sich dadurch auch Protonen zur Rekombination nutzen. Bei der Verbindung mit der Kathode 14 lässt sich die Protonenleitung unter Umständen verbessern.

Vorteilhaft ist es, wenn die katalytische Zwischenlage 24 mit der Anode 16 über eine Verbindungseinrichtung 26 verbunden ist. Dadurch lässt sich die Wasserproduktion erhöhen.

Die Verbindungseinrichtung 26 kann eine Widerstandseinrichtung 28 mit einstellbarem Widerstand umfassen. Über die Einstellung des Widerstandswerts der Widerstandseinrichtung 28 lässt sich der elektrische Strom, welcher zwischen der Anode 16 und der katalytischen Zwischenlage 24 fließt, einstellen. Dadurch wiederum lässt sich in gewissem Maße die Wasserbildung an der katalytischen Zwischenlage 24 einstellen. Dadurch ist eine Anpassung an die externen Verhältnisse möglich; beispielsweise ist eine Temperaturanpassung möglich. So kann bei höheren Temperaturen die Wasserbildung erhöht werden.

Beispielsweise ist es grundsätzlich möglich, dass die Widerstandseinrichtung 28 temperatursensitiv ausgebildet ist und zwar derart, dass bei Temperaturerhöhung der Widerstandswert sinkt, so dass bei Temperaturerhöhung ein größerer Strom zwischen der Anode 16 und der katalytischen Zwischenlage 24 fließt. Dadurch wird bei Temperaturerhöhung die Wasserbildung erhöht. Bei entsprechender Ausbildung der Widerstandseinrichtung 28 lässt sich eine Regelung und insbesondere automatische Regelung der Befeuchtung der Membraneinrichtung 18 durchführen.

**Patentansprüche**

1. Elektroden-Membran-Einheit für eine Brennstoffzelle (10), welche mit gasförmigem Brennstoff betrieben ist, umfassend eine Kathode (14), eine Anode (16) und eine protonenleitende Membraneinrichtung (18), welche zwischen der Anode (16) und der Kathode (14) angeordnet ist, wobei die Membraneinrichtung (18) mindestens eine katalytische Zwischenlage (24) aufweist, an welcher Wasser durch eine katalytische Reaktion von Oxidator und Brennstoff erzeugbar ist,
**dadurch gekennzeichnet , dass** die mindestens eine katalytische Zwischenlage (24) mit der Anode (16) über eine Widerstandseinrichtung (28) elektrisch verbunden ist.

2. Elektroden-Membran-Einheit nach Anspruch 1, **dadurch gekennzeichnet, dass** die Membraneinrichtung (18) mehrlagig aufgebaut ist mit einer ersten Membranlage (20), welche an die Kathode (14) grenzt, einer zweiten Membranlage (22), welche an die Anode (16) grenzt, und der mindestens einen katalytischen Zwischenlage (24).

3. Elektroden-Membran-Einheit nach Anspruch 2, **dadurch gekennzeichnet, dass** eine einzige katalytische Zwischenlage (24) zwischen der ersten Membranlage (20) und der zweiten Membranlage (22) angeordnet ist und jeweils an diese grenzt.

4. Elektroden-Membran-Einheit nach Anspruch 3, **dadurch gekennzeichnet, dass** die erste Membranlage (20) eine kleinere Dicke aufweist als die zweite Membranlage (22).

5. Elektroden-Membran-Einheit nach einem der vorangehenden Ansprüche, **dadurch gekennzeichnet, dass** die mindestens eine katalytische Zwischenlage (24) sich über die ganze Querschnittsfläche der Membraneinrichtung (18) quer zur Verbindungsrichtung zwischen der Kathode (14) und der Anode (16) erstreckt.

6. Elektroden-Membran-Einheit nach einem der vorangehenden Ansprüche, **dadurch gekennzeichnet, dass** die mindestens eine katalytische Zwischenlage (24) durch Aufsprühen hergestellt ist.

7. Elektroden-Membran-Einheit nach einem der vorangehenden Ansprüche, **dadurch gekennzeichnet, dass** die Membraneinrichtung (18) durchlässig für Oxidator zur mindestens einen katalytischen Zwischenlage (24) ausgebildet ist.

8. Elektroden-Membran-Einheit nach Anspruch 7, **dadurch gekennzeichnet, dass** die Membraneinrichtung (18) perforiert ausgebildet ist.

9. Elektroden-Membran-Einheit nach Anspruch 7 oder 8, **dadurch gekennzeichnet, dass** eine erste Membranlage (20), welche zwischen der Kathode (14) und der mindestens einen katalytischen Zwischenlage (24) angeordnet ist, durchlässig für Oxidator ausgebildet ist.

10. Elektroden-Membran-Einheit nach einem der vorangehenden Ansprüche, **dadurch gekennzeichnet, dass** die Widerstandseinrichtung (28) bezüglich ihres Widerstandswerts einstellbar ausgebildet ist.

11. Elektroden-Membran-Einheit nach einem der vorangehenden Ansprüche, **dadurch gekennzeichnet, dass** die Widerstandseinrichtung (28) bezüglich ihres Widerstandswerts temperatursensitiv ausgebildet ist.

12. Elektroden-Membran-Einheit nach einem der vorangehenden Ansprüche, **dadurch gekennzeichnet, dass** die Dicke der mindestens einen katalytischen Zwischenlage (24) in der Größenordnung Mikrometer liegt.

13. Elektroden-Membran-Einheit nach einem der vorangehenden Ansprüche, **dadurch gekennzeichnet, dass** die katalytische Zwischenlage (24) protonenleitend ist.

14. Elektroden-Membran-Einheit nach einem der vorangehenden Ansprüche, **dadurch gekennzeichnet, dass** der Brennstoff Wasserstoff ist.

**15.** Elektroden-Membran-Einheit nach einem der vorangehenden Ansprüche, **dadurch gekennzeichnet, dass** die mindestens eine katalytische Zwischenlage (24) aus einem Katalysatormaterial hergestellt ist.

**16.** Verwendung einer Elektroden-Membran-Einheit gemäß einem der vorangehenden Ansprüche in einer Brennstoffzelle.

**17.** Brennstoffzelle, welche eine Elektroden-Membran-Einheit gemäß einem der Ansprüche 1 bis 15 umfasst.

**18.** Brennstoffzelle nach Anspruch 17, welche eine PEFC-Brennstoffzelle ist.

**Claims**

**1.** Electrode-membrane unit for a fuel cell (10) that is operated with gaseous fuel, comprising a cathode (14), an anode (16) and a proton-conducting membrane device (18) which is disposed between the anode (16) and the cathode (14), wherein the membrane device (18) comprises at least one catalytic intermediate layer (24), at which water can be generated by means of a catalytic reaction of oxidising agent and fuel,
**characterized in that** the at least one catalytic intermediate layer (24) is electrically connected to the anode (16) by a resistor device (28).

**2.** Electrode-membrane unit according to claim 1, **characterized in that** the membrane device (18) is of a multi-layered structure comprising a first membrane layer (20) adjoining the cathode (14), a second membrane layer (22) adjoining the anode (16), and the at least one catalytic intermediate layer (24).

**3.** Electrode-membrane unit according to claim 2, **characterized in that** a single catalytic intermediate layer (24) is disposed between, and in each case adjoins, the first membrane layer (20) and the second membrane layer (22).

**4.** Electrode-membrane unit according to claim 3, **characterized in that** the first membrane layer (20) has a smaller thickness than the second membrane layer (22).

**5.** Electrode-membrane unit according to one of the preceding claims, **characterized in that** the at least one catalytic intermediate layer (24) extends over the entire cross-sectional area of the membrane device (18) transversely of the direction of connection between the cathode (14) and the anode (16).

**6.** Electrode-membrane unit according to one of the preceding claims, **characterized in that** the at least one catalytic intermediate layer (24) is produced by spraying on.

**7.** Electrode-membrane unit according to one of the preceding claims, **characterized in that** the membrane device (18) is configured to allow oxidising agent to pass through to the at least one catalytic intermediate layer (24).

**8.** Electrode-membrane unit according to claim 7, **characterized in that** the membrane device (18) is of a perforated configuration.

**9.** Electrode-membrane unit according to claim 7 or 8, **characterized in that** a first membrane layer (20), which is disposed between the cathode (14) and the at least one catalytic intermediate layer (24), is configured to be permeable to oxidising agent.

**10.** Electrode-membrane unit according to one of the preceding claims, **characterized in that** the resistor device (28) is configured to be adjustable with regard to its resistance value.

**11.** Electrode-membrane unit according to one of the preceding claims, **characterized in that** the resistor device (28) is configured to be temperature-sensitive with regard to its resistance value.

**12.** Electrode-membrane unit according to one of the preceding claims, **characterized in that** the thickness of the at least one catalytic intermediate layer (24) is in the order of magnitude of micrometres.

**13.** Electrode-membrane unit according to one of the preceding claims, **characterized in that** the catalytic intermediate layer (24) is proton-conducting.

**14.** Electrode-membrane unit according to one of the preceding claims, **characterized in that** the fuel is hydrogen.

**15.** Electrode-membrane unit according to one of the preceding claims, **characterized in that** the at least one catalytic intermediate layer (24) is made from a catalyst material.

**16.** Use of an electrode-membrane unit according to one of the preceding claims in a fuel cell.

**17.** Fuel cell, which comprises an electrode-membrane unit according to one of claims 1 to 15.

**18.** Fuel cell according to claim 17, which is a proton exchange fuel cell.

**Revendications**

**1.** Unité de membrane d'électrodes pour une cellule à combustible (10) actionnée avec du combustible sous forme de gaz, comprenant une cathode (14), une anode (16) et un dispositif de membrane conducteur de protons (18) qui est disposé entre l'anode (16) et la cathode (14), le dispositif de membrane (18) comprenant au moins une couche intermédiaire catalytique (24) au niveau de laquelle de l'eau peut être produite par une réaction catalytique d'oxydant et de combustible,
**caractérisée en ce que** l'au moins une couche intermédiaire catalytique (24) est reliée électriquement à l'anode (16) par l'intermédiaire d'un dispositif de résistance (28).

**2.** Unité de membrane d'électrodes selon la revendication 1, **caractérisée en ce que** le dispositif de membrane (18) présente une structure multicouche avec une première couche de membrane (20) jouxtant la cathode (14), une seconde couche de membrane (22) jouxtant l'anode (16), et l'au moins une couche intermédiaire catalytique (24).

**3.** Unité de membrane d'électrodes selon la revendication 2, **caractérisée en ce qu'**une seule couche intermédiaire catalytique (24) est agencée entre la première couche de membrane (20) et la seconde couche de membrane (22) et jouxte respectivement celles-ci.

**4.** Unité de membrane d'électrodes selon la revendication 3, **caractérisée en ce que** la première couche de membrane (20) présente une épaisseur inférieure à celle de la seconde couche de membrane (22).

**5.** Unité de membrane d'électrodes selon l'une des revendications précédentes, **caractérisée en ce que** l'au moins une couche intermédiaire catalytique (24) s'étend sur toute la surface de la section transversale du dispositif de membrane (18) en diagonale par rapport à la direction de liaison entre la cathode (14) et l'anode (16).

**6.** Unité de membrane d'électrodes selon l'une des revendications précédentes, **caractérisée en ce que** l'au moins une couche intermédiaire catalytique (24) est fabriquée par vaporisation.

**7.** Unité de membrane d'électrodes selon l'une des revendications précédentes, **caractérisée en ce que** le dispositif de membrane (18) est formé perméable à l'oxydant par rapport à au moins une couche intermédiaire catalytique (24).

**8.** Unité de membrane d'électrodes selon la revendication 7, **caractérisée en ce que** le dispositif de membrane (18) est formé perforé.

**9.** Unité de membrane d'électrodes selon la revendication 7 ou 8, **caractérisée en ce qu'**une première couche de membrane (20) agencée entre la cathode (14) et l'au moins une couche intermédiaire catalytique (24) est formée perméable à l'oxydant.

**10.** Unité de membrane d'électrodes selon l'une des revendications précédentes, **caractérisée en ce que** le dispositif de résistance (28) est formé réglable sur le plan de sa valeur de résistance.

**11.** Unité de membrane d'électrodes selon l'une des revendications précédentes, **caractérisée en ce que** le dispositif de résistance (28) est formé sensible à la température sur le plan de sa valeur de résistance.

**12.** Unité de membrane d'électrodes selon l'une des revendications précédentes, **caractérisée en ce que** l'épaisseur de l'au moins une couche intermédiaire catalytique (24) est de l'ordre du micromètre.

**13.** Unité de membrane d'électrodes selon l'une des revendications précédentes, **caractérisée en ce que** la couche intermédiaire catalytique (24) est conductrice de protons.

**14.** Unité de membrane d'électrodes selon l'une des revendications précédentes, **caractérisée en ce que** le combustible est de l'hydrogène.

**15.** Unité de membrane d'électrodes selon l'une des revendications précédentes, **caractérisée en ce que** l'au moins une couche intermédiaire catalytique (24) est fabriquée en un matériau de catalyseur.

**16.** Utilisation d'une unité de membrane d'électrodes selon l'une des revendications précédentes dans une cellule à combustible.

**17.** Cellule à combustible comprenant une unité de membrane d'électrodes selon l'une des revendications 1 à 15.

**18.** Cellule à combustible selon la revendication 17, qui est une cellule à combustible à électrolyte polymère (PEFC).

# FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19917812 C2

- US 20050196661 A1